# EUROPÄISCHE PATENTANMELDUNG

(11) **EP 2 339 243 A1**
(43) Veröffentlichungstag der Anmeldung: **29.06.2011**
(21) Anmeldenummer: 09015907.0
(22) Anmeldetag: 22.12.2009
(51) Int. Cl.: F24C 15/32, A21B 3/04, F16K 1/226

(54) **Gewerbliches Gargerät, insbesondere Heißluftdämpfer**

(71) Anmelder: Convotherm Elektrogeräte GmbH, 82436 Eglfing (DE)
(72) Erfinder: Fischhaber, Herbert, 82380 Peißenberg (DE)
(74) Vertreter: Schmitz, Hans-Werner

(57) **Zusammenfassung**

Die vorliegende Erfindung betrifft ein gewerbliches Gargerät (1), insbesondere Heißluftdämpfer, mit einem Gehäuse (2), in dem ein mittels Garraumtür öffen- und schließbarer Garraum (3) angeordnet ist, mit einem motorisch antreibbaren Lüfterrad (4), mit einer Heizeinrichtung (7) zur Erwärmung der vom Lüfterrad (4) zugeleiteten Luft (L_{W}), mit einem Garraumablauf (8), der über eine Wasservorlage (9) zu einem Geräteablauf (10) für Abwasser (A_{W}) führt, mit einer Entlüftungsöffnung (12) für den Geräteablauf (10), mit einer mittels einer ersten ansteuerbaren Klappenanordnung (13) öffen- und schließbaren Frischluftansaugöffnung (14), über die mittels am Lüfterrad (4) rückseitig angeordneter Frischluftschaufeln (15, 16) Frischluft (F_{L}) in den Garraum (3) förderbar ist, und mit einer mittels einer ansteuerbaren zweiten Klappenanordnung (17) öffen- und schließbaren Dampfablassöffnung (18), die mit dem Garraum (3) in Strömungsverbindung steht.

## Beschreibung

### Beschreibung

Die Erfindung betrifft ein gewerbliches Gargerät, insbesondere in Form eines Heißluftdämpfers, gemäß Anspruch 1.

Bei bekannten Gargeräten dieser Art ergibt sich das Problem, dass aufgrund der in den zu garenden Produkten enthaltenen Feuchtigkeit, wie beispielsweise in Fleisch oder Geflügel, Wasserdampf entsteht, der sich auf dem zu garenden Produkt absetzen kann bzw. bei der Bildung einer knusprigen Kruste hinderlich ist.

Um dieses Problem zu lösen, ist es unter anderem bekannt, bei Garräumen mit einem Ablauf, welcher eine ständig offene Verbindung zum Aufstellraum aufweist, über eine steuerbare Klappe trockene Luft von außen in den Garraum zu saugen und ein Dampf-Luft-Gemisch über den Garraumablauf aus dem Garraum zu drücken. Diese Garräume sind jedoch wegen ihrer ständig offenen Verbindung zum Aufstellungsraum bezüglich Energieausnutzung in allen anderen Betriebsarten ineffizient.

Im Sinne einer besseren Energieausnutzung, werden daher in Heißluftdämpfern auch Garräume verwendet, bei denen sich im Garraumablauf eine Wasservorlage, z.B. in Form eines Siphons befindet. Zur Dampfregulierung verfügen diese Heißluftdämpfer zumeist nur über eine kleine Rohr- oder Schlauchverbindung als Messleitung bzw. Bypass zum Aufstellungsraum, über welche jedoch kaum Energie verloren gehen kann.

Bei Heißluftdämpfern der zuletzt genannten Bauart ergibt sich jedoch das Problem, dass durch die vorhandene Wasservorlage im Garraumablauf das Ausblasen eines Dampf-Luft-Gemisches für die Entfeuchtung des Garraums sehr hinderlich ist und damit eine Entfeuchtung auf diese Weise nur unzureichend gelingt.

Es ist daher Aufgabe der vorliegenden Erfindung, ein gewerbliches Gargerät, insbesondere einen Heißluftdämpfer, zu schaffen, welches ohne Verzicht auf eine Wasservorlage im Garraumablauf eine Ableitung von während des Garprozesses entstandenem Dampf ermöglicht.

Die Lösung dieser Aufgabe erfolgt durch die Merkmale des Anspruchs 1.

Das erfindungsgemäße Gargerät zeichnet sich insbesondere durch eine Frischluftansaugöffnung aus, die mittels einer Klappenanordnung geöffnet und geschlossen werden kann. Über diese Frischluftansaugöffnung kann trockene Frischluft in den Garraum angesaugt werden, um übermäßige Dampfmengen aus dem Garraum zu entfernen, wozu eine ebenfalls über eine Klappenanordnung öffen- und schließbare Dampfablassöffnung vorgesehen ist, die an jedweder geeigneter Stelle des Gehäuses des erfindungsgemäßen Gargeräts angeordnet werden kann. Durch diese überraschend einfache Maßnahme ist es erfindungsgemäß möglich, überschüssigen Dampf aus dem Garraum zu befördern, was über den Geräteablauf nicht in ausreichendem Maße erreichbar wäre, da dieser mit einer Wasservorlage versehen ist, um die Vorteile eines geschlossenen Geräteablaufes im Gegensatz zu ansonsten bekannten offenen Geräteabläufen nicht aufgeben zu müssen.

In dem erfindungsgemäßen Gargerät wird somit zunächst entsprechend dem zu garenden Gargut über das Lüfterrad Luft, die über eine Heizeinrichtung erwärmt wird, in den Garraum gefördert und wieder aus diesem angesaugt, um die erforderliche Luftzirkulation erwärmter Luft zur Durchführung des Garprozesses bereitzustellen.

Sollte sich aufgrund des Garvorganges ein Übermaß an Dampf im Garraum gebildet haben, kann trockene Frischluft angesaugt und in den Garraum gefördert werden, die sich mit dem Dampf mischt und die über die Dampfablassöffnung aus dem Garraum herausgeleitet wird. Die Klappenanordnungen in der Frischluftansaugöffnung und der Dampfablassöffnung bzw. Dampfablassleitung dienen hierbei zur Steuerung dieser Vorgänge.

Die Unteransprüche 2 bis 9 haben vorteilhafte Weiterbildungen der Erfindung zum Inhalt.

In den Ansprüchen 10 bis 14 ist eine erfindungsgemäße Klappenanordnung als selbstständig handelbares Objekt definiert.

Die zweite Klappenanordnung, die in der Dampfablassöffnung bzw. Dampfablassleitung angeordnet ist, weist eine Klappe auf, die beim Ablassen von Dampf aus dem Garraum Temperaturen bis zu 230°C ausgesetzt ist. Aus diesem Grunde weist die Klappe einen Außendurchmesser auf, der kleiner ist als der Innendurchmesser der Dampfablassöffnung, damit sich die Klappe bei Einwirkung derartig hoher Temperaturen ausdehnen kann, ohne dass es zu einem Verklemmen der Klappe in der Dampfablassöffnung kommt. Um andererseits die Dichtigkeit der Klappe in der geschlossenen Stellung sicherstellen zu können, ist sie mit zumindest einem federnden Dichtring versehen, der in einer Außennut der Klappe anordenbar ist. Dieser federnde Dichtring weist einen Außendurchmesser auf, der im entspannten Zustand des Dichtringes größer ist als der Innendurchmesser der Dampfablassöffnung. Wird die Klappe von der Offenstellung in die Schließstellung gedreht, wird der federnde Dichtring von der Innenwand der Dampfablassöffnung in die Nut gedrückt, was aufgrund seiner Federcharakteristiken möglich ist. Durch das Hineindrücken des Dichtringes in die Nut ergibt sich wiederum aufgrund der Federelastizität des Dichtringes eine ausreichend große Anpress- und damit Dichtkraft, da der Dichtring in der Schließstellung der Klappe nicht völlig in die Nut versenkt wird, sondern an der Innenwand der Dampfablassöffnung anliegt und somit die erforderliche Dichtheit in der Schließstellung der Klappe sicherstellt.

Bei einer besonders bevorzugten einfachen Ausführungsform ist der Dichtring ein aus dem Motorenbau bekannter Kolbenring.

Als Materialien kommen sowohl hitzebeständige Metalle wie auch hitzebeständige Kunststoffe für den Dichtring in Frage.

Bei einer weiteren bevorzugten Ausführungsform weist die Klappe zwei an ihrem Außenumfang angeordnete, beabstandete Nuten auf, die jeweils einen Dichtring mit den zuvor beschriebenen Eigenschaften aufnehmen können.

Bei einer weiteren bevorzugten Ausführungsform weist die Klappe eine ballige Außenkontur auf ihrer Umfangsfläche auf, damit sich die Klappe beim Drehen in die Schließposition nicht mit der Innenwand der Dampfablassöffnung verhakt.

Die Dampfablassöffnung kann an allen geeigneten Stellen des Garraumes bzw. des Gehäuses angeordnet werden.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematisch stark vereinfachte Prinzipdarstellung einer Ausführungsform des erfindungsgemäßen Gargerätes,
- Fig. 2: eine schematisch leicht vereinfachte perspektivische, auseinandergezogene Darstellung der Komponenten der zweiten Klappenanordnung,
- Fig. 3: eine der Fig. 2 entsprechende perspektivische Darstellung der Komponenten der zweiten Klappenanordnung in montiertem Zustand,
- Fig. 4: eine Seitenansicht der erfindungsgemäßen Klappe zur Verdeutlichung ihrer balligen Außenkontur, und
- Fig. 5: eine Prinzipdarstellung einer besonders bevorzugten Ausführungsform einer Dampfablasseinrichtung des erfindungsgemäßen Gargeräts.

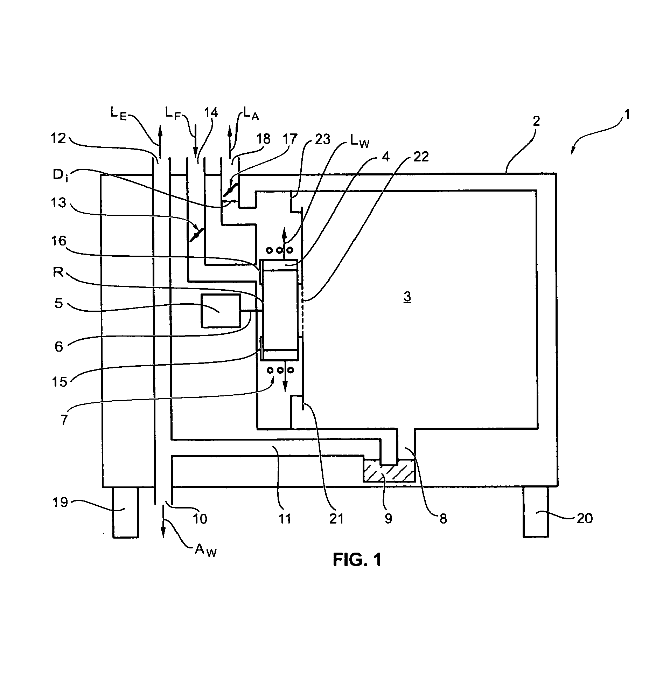

Fig. 1 zeigt ein gewerbliches Gargerät 1, insbesondere in Form eines Heißluftdämpfers in schematisch vereinfachter Darstellung.

Das Gargerät 1 weist ein Gehäuse 2 auf, das über Füße auf einem Aufstellboden aufgestellt werden kann, von denen in Fig. 1 die Füße 19 und 20 sichtbar sind.

Im Gehäuse 2 ist ein Garraum 3 angeordnet, der über eine in Fig. 1 nicht näher dargestellte Tür geöffnet und geschlossen werden kann.

Im Gehäuse 2 ist ferner ein Lüfterrad 4 angeordnet, das über einen Motor 5 mit seiner Antriebswelle 6 angetrieben werden kann. Das Lüfterrad 4 ist von einer Heizeinrichtung 7 umgeben, über die das Lüfterrad 4 Luft fördert, die als erwärmte Luft L_{W} in den Garraum 3 gelangt.

Der Garraum 3 ist ferner in seinem Bodenbereich mit einem Garraumablauf 8 versehen, der über eine Wasservorlage 9 in eine Verbindungsleitung 11 mündet, die zu einem Geräteablauf 10 führt, über den Abwasser A_{W} aus dem Garraum 3 abgeleitet werden kann. Der Geräteablauf 10 ist ferner mit einer Entlüftungsöffnung bzw. Entlüftungsleitung 12 versehen, über die abgeleitete Luft L_{E} ausströmen kann.

Ferner zeigt die Ausführungsform gemäß Fig. 1 eine Frischluftansaugöffnung bzw. Frischluftansaugleitung 14, in der eine erste Klappenanordnung 13 angeordnet ist. Die Klappenanordnung 13 weist eine Steuerung und einen motorischen Antrieb auf, die in Fig. 1 jedoch nicht dargestellt sind. Die erste Klappenanordnung 13 kann mithin die Fristluftansaugöffnung 14 öffnen und schließen und gestattet im geöffneten Zustand das Ansaugen von Frischluft L_{F}, wozu das Lüfterrad 4 mit an der Rückseite R angeordneten Frischluftschaufein 15, 16 versehen ist. Die Rückseite R ist hierbei die Seite des Lüfterrades 4, die auf den Motor 5 weist.

Ferner ist das erfindungsgemäße Gargerät 1 mit einer Dampfablassöffnung bzw. Dampfablassleitung 18 versehen, die über eine zweite Klappenanordnung 17 geöffnet und geschlossen werden kann. Der Aufbau dieser zweiten Klappenanordnung 17 wird nachfolgend näher erläutert werden.

Mit dem aus Fig. 1 ersichtlichen prinzipiellen Aufbau des Gargerätes 1 ist es möglich, wie üblich Warm- bzw. Heißluft L_{W} zu erzeugen, wozu das Lüfterrad 4 Luft über die Heizeinrichtung 7 leitet, die dann im erhitzten Zustand in den Garraum 3 gelangt, um unterschiedlichste Garprozesse durchzuführen.

Wenn sich aufgrund der Durchführung des Garprozesses im Garraum 3 Dampf in übermäßigem Maße bildet, kann die Frischluftöffnung 14 durch Ansteuerung der ersten Klappenanordnung 13 geöffnet werden, so dass das Lüfterrad 4 Frischluft in den Garraum 3 fördert, die sich mit dem gebildeten Dampf mischt. Um dieses Dampf-Luft-Gemisch aus dem Garraum 3 entfernen zu können, wird die Dampfablassöffnung 18 über die zweite Klappenanordnung 17 geöffnet, so dass aufgrund der Strömungsverbindung zwischen dem Garraum 3 und der Dampfablassöffnung 18 ein Dampf-Luft-Gemisch LA aus dem Garraum 3 entweichen kann, um einerseits die nötige Abfuhr von übermäßigem Dampf sicherzustellen und um andererseits zu vermeiden, dass während anderer Garprogramme über einen offenen Garraumablauf übermäßig Energie entweichen kann.

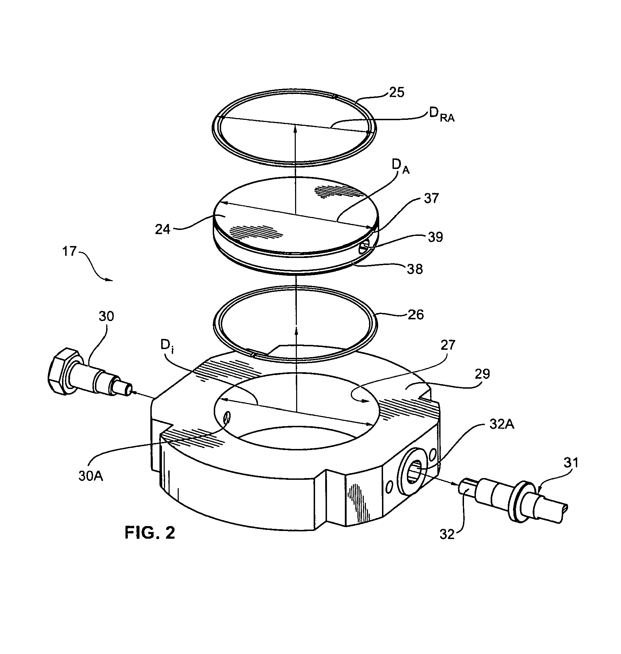

In Fig. 2 sind die Komponenten der zweiten Klappenanordnung 17 in auseinander gezogener perspektivischer Darstellung gezeigt. Bei dieser Ausführungsform weist die zweite Klappenanordnung 17 eine kreisrunde Klappe 24 auf, deren Durchmesser D_{A} bewusst kleiner gewählt ist, als der Innendurchmesser D₁ eines Rohrabschnittes 29, der, wie nachfolgend beschrieben werden wird, in die Dampfablassöffnung bzw. Dampfablassleitung 18 eingesetzt werden kann. Ist kein derartiger separater einsetzbarer Rohrabschnitt 29 vorgesehen, ist der Außendurchmesser D_{A} kleiner zu wählen als der Durchmesser D_{I} der Dampfablassöffnung bzw. Dampfablassleitung 18, wie dies in Fig. 1 durch die Verdeutlichung des Innendurchmessers D_{I} gezeigt ist.

Die Ausführungsform der zweiten Klappenanordnung 17 gemäß Fig. 2 weist ferner als besonders bevorzugte Ausführungsform zwei Dichtringe 25 und 26 auf, die in Nuten 37 und 38 am Außenumfang der Klappe 24 eingesetzt werden können. Der Außendurchmesser D_{RA} dieser beiden Dichtringe 25 und 26 (hier nur verdeutlicht am Dichtring 25) ist im entspannten Zustand der Dichtringe 25 und 26, der in Fig. 2 sichtbar ist, größer als der Innendurchmesser D_{I}.

Fig. 2 verdeutlicht ferner einen Lagerzapfen 30, der im Beispielsfalle in eine mit einem Innengewinde versehene Ausnehmung 30A des Rohrabschnittes 29 eingeschraubt werden kann, um in eine entsprechende Ausnehmung der Klappe 24 einzugreifen, die diametral zu einer Ausnehmung 39 angeordnet ist, die in Fig. 2 sichtbar ist.

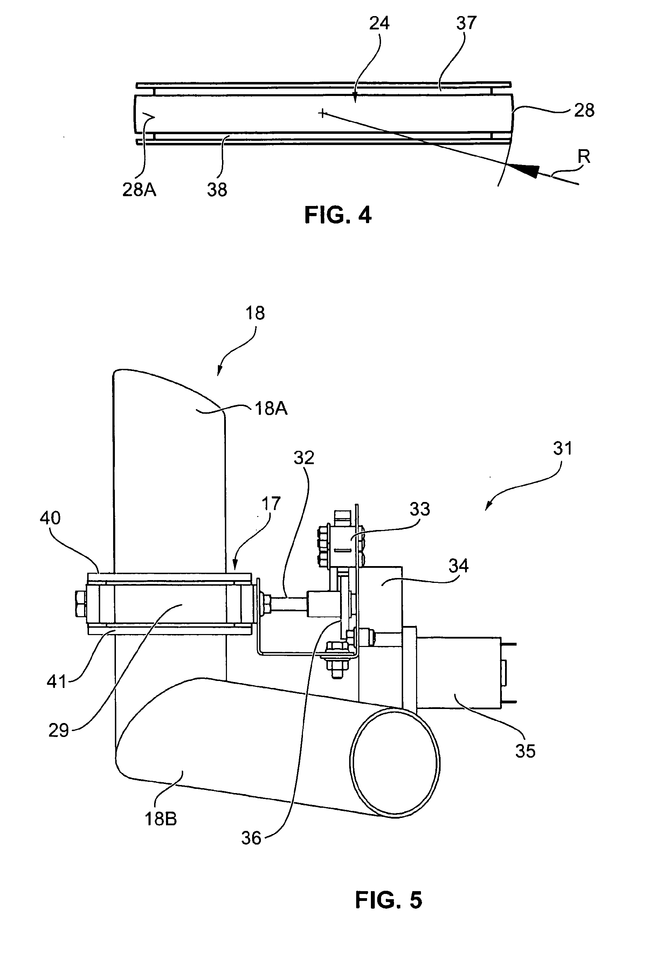

Ferner zeigt Fig. 2 eine Antriebswelle 32 eines Antriebs 31 für die Klappe 24, der nachfolgend anhand der Fig. 4 im Einzelnen erläutert werden wird.

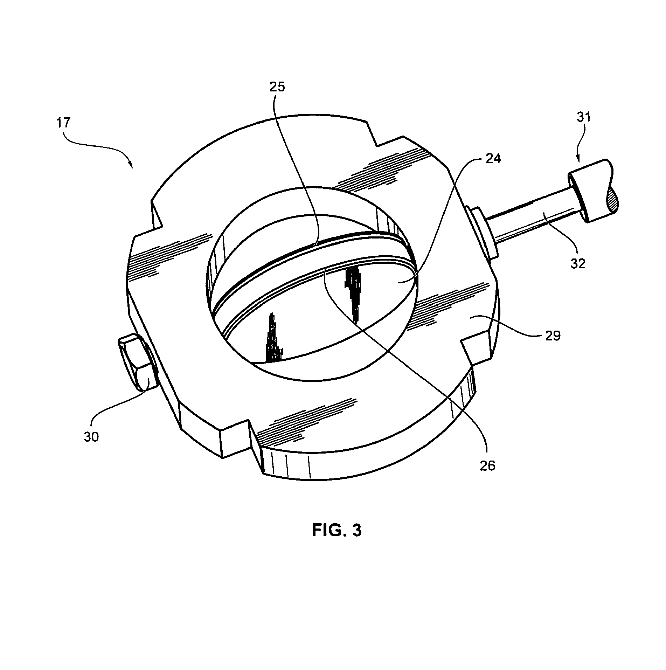

Fig. 3 zeigt den montierten Zustand der zweiten Klappenanordnung 17, wobei sich die Klappe 24 in geöffneter Position befindet. In dieser Position sind die beiden Dichtringe 25 und 26 aufgrund ihrer elastischen Federeigenschaften wiederum im entspannten Zustand, in dem sie den Durchmesser D_{RA} einnehmen.

Wird die Klappe jedoch durch ihren Antrieb 31 in die Schließposition überführt, legen sich die Dichtringe 25 und 26 an die Innenwand 27 des Rohrabschnittes 29 an und werden somit in die jeweiligen Nuten 37 und 38 gedrückt, ragen jedoch noch so viel aus diesen Nuten 37 und 38 hervor, dass sie in Anlage an der Innenwand 27 verbleiben und somit die nötige Dichtwirkung zum Verhindern eines Dampfaustrittes aufbringen können. Die Dimensionierung der Klappe und der Dichtringe kann hierbei an den jeweiligen Anwendungsfall angepasst werden.

Um das Hineindrehen der Klappe 24 von der Offenstellung in die Schließstellung weiter zu erleichtern, ist sie bei einer besonders bevorzugten Ausführungsform, die in Fig. 4 dargestellt ist, mit einer abgerundeten Außenkontur 28 auf ihrer Außenumfangsfläche 28A versehen. Der Radius dieser balligen Außenkontur 28 ist durch den Pfeil R in Fig. 4 gezeigt.

Fig. 5 zeigt schließlich eine besonders bevorzugte Ausführungsform einer Dampfablasseinrichtung bzw. Dampfablassleitung 18, die im Beispielsfalle zwei zueinander im rechten Winkel stehende Leitungsabschnitte 18A und 18B aufweist. Im Leitungsabschnitt 18A ist der Rohrabschnitt 29 über zwei Rohrflansche 40 und 41 fixiert.

Ferner verdeutlicht Fig. 5 den Antrieb 31 für die im Rohrabschnitt 29 gelagerte, in Fig. 5 jedoch nicht sichtbare, Klappe 24. Dieser Antrieb bzw. diese Antriebseinrichtung 31 weist einen Motor 35, ein mit dem Motor verbundenes Getriebe 34 sowie eine Antriebswelle 32 auf, die die Getriebeausgangswelle darstellt und die mit der Klappe 24 zu deren Betätigung verbunden ist. Ferner ist ein Schalter 33 sowie eine Kurvenscheibe 36 zu sehen, die als Endanschlag für die Offenstellung bzw. die Schließstellung der Klappe 24 dienen.

Neben der voranstehenden schriftlichen Offenbarung der Erfindung wird hiermit explizit zur Ergänzung auf deren zeichnerische Darstellung in den Fig. 1 bis 5 Bezug genommen.

Ferner zeitigt sich vorliegende Erfindung neben dem zuvor beschriebenen erfindungsgemäßen Gargerät und der erfindungsgemäßen Klappenanordnung in jedweder Kombination und insbesondere Unterkombination der beschriebenen Merkmale. Insbesondere ist hervorzuheben, dass die erfindungsgemäße Klappenanordnung nicht nur beim Einsatz der beschriebenen Dampfablassöffnung eines gewerblichen Gargerätes eingesetzt werden kann, sondern bei jedweder anderen Öffnung bzw. Leitung, in der heiße Gase strömen.

### Bezugszeichenliste

- 1: Gewerbliches Gargerät
- 2: Gehäuse
- 3: Garraum (dargestellt ohne Messleitung bzw. Bypass zur Dampfregulierung)
- 4: Lüfterrad
- 5: Motor
- 6: Welle
- 7: Heizeinrichtung
- 8: Garraumablauf
- 9: Wasservorlage
- 10: Geräteablauf
- 11: Verbindungsleitung
- 12: Entlüftungsöffnung bzw. Entlüftungsleitung
- 13: erste Klappenanordnung
- 14: Frischluftansaugöffnung bzw. Frischluftansaugleitung
- 15, 16: Frischluftschaufeln
- 17: zweite Klappenanordnung
- 18: Dampfablassöffnung bzw. Dampfablassleitung/Dampfablasseinrichtung
- 18A,B: Rohrleitungsabschnitte
- 19,20: Füße
- 21: Schutzblech
- 22: Schutzblechöffnung mit Einlauftrichter
- 23: Schutzblechhalterung
- 24: Klappe
- 25, 26: Dichtringe/Kolbenringe
- 27: Innenwand
- 28: Außenkontur
- 28A: Umfangsfläche
- 29: Rohrabschnitt
- 30: Lagerzapfen
- 30A: Ausnehmung
- 31: Antrieb/Antriebseinrichtung
- 32: Antriebswelle
- 32A: Durchtrittsausnehmung im Rohrabschnitt 29 für die Antriebswelle 32
- 33: Schalter
- 34: Getriebe
- 35: Motor
- 36: Kurvenscheibe
- 37, 38: Nuten für die Dichtringe 25 und 26
- 39: Ausnehmung
- 40, 41: Rohrflansche
- L_{E}: abgeleitete Luft
- L_{F}: Frischluft
- L_{A}: Luft/Dampfgemisch
- L_{W}: erhitzte Luft
- Aw: Abwasser
- D_{RA}: Außendurchmesser der Dichtringe 25, 26
- D_{I}: Innendurchmesser des Rohrabschnittes 29 bzw. der Dampfablassöffnung/ Dampfablassleitung 18
- R: Radius der balligen Außenkontur 28

## Patentansprüche

1. Gewerbliches Gargerät (1), insbesondere Heißluftdämpfer,
- mit einem Gehäuse (2), in dem ein mittels Garraumtür öffen- und schließbarer Garraum (3) angeordnet ist,
- mit einem motorisch antreibbaren Lüfterrad (4),
- mit einer Heizeinrichtung (7) zur Erwärmung der vom Lüfterrad (4) zugeleiteten Luft (Lw),
- mit einem Garraumablauf (8), der über eine Wasservorlage (9) zu einem Geräteablauf (10) für Abwasser (A_{W}) führt,
- mit einer Entlüftungsöffnung (12) für den Geräteablauf (10),
- mit einer mittels einer ersten ansteuerbaren Klappenanordnung (13) öffen- und schließbaren Frischluftansaugöffnung (14), über die mittels am Lüfterrad (4) rückseitig angeordneter Frischluftschaufeln (15, 16) Frischluft (F_{L}) in den Garraum (3) förderbar ist, und
- mit einer mittels einer ansteuerbaren zweiten Klappenanordnung (17) öffen- und schließbaren Dampfablassöffnung (18), die mit dem Garraum (3) in Strömungsverbindung steht.

2. Gargerät nach Anspruch 1, **dadurch gekennzeichnet, dass** die zweite Klappenanordnung (17) eine Klappe (24) aufweist, deren Außendurchmesser (D_{A}) kleiner ist als ein Innendurchmesser (D₁) der Dampfablassöffnung (18).

3. Gargerät nach Anspruch 1 oder 2, **dadurch gekennzeichnet, dass** die Klappe (24) mit zumindest einem federnden Dichtring (25, 26) versehen ist, dessen Außendurchmesser (D_{RA}) im entspannten Zustand größer ist als der Innendurchmesser (D₁) der Dampfablassöffnung (18).

4. Gargerät nach Anspruch 3, **dadurch gekennzeichnet, dass** der Dichtring (25, 26) als Kolbenring ausgebildet ist.

5. Gargerät nach Anspruch 3 oder 4, **dadurch gekennzeichnet, dass** der Dichtring (25, 26) aus hitzebeständigem Material besteht.

6. Gargerät nach Anspruch 5, **dadurch gekennzeichnet, dass** der Dichtring (25, 26) aus Metall oder Kunststoff besteht.

7. Gargerät nach einem der Ansprüche 3 bis 6, **dadurch gekennzeichnet, dass** die Klappe (24) mit zwei beabstandet zueinander angeordneten Dichtringen (25, 26) versehen ist.

8. Gargerät nach einem der Ansprüche 2 bis 6, **dadurch gekennzeichnet, dass** die Klappe (24) eine ballige Außenkontur (28) aufweist.

9. Gargerät nach einem der Ansprüche 1 bis 8, **dadurch gekennzeichnet, dass** die zweite Klappenanordnung (17) als Nachrüstmodul für die Dampfablassöffnung bzw. Dampfablassleitung (18) ausgebildet ist.

10. Klappenanordnung (17) einer Heißluftöffnung, insbesondere einer Dampfablassöffnung (18) eines gewerblichen Gargeräts (1), mit einer Klappe (24), deren Außendurchmesser (D_{A}) kleiner ist als der Innendurchmesser (D₁) der Heißluftöffnung bzw. der Dampfablassöffnung (18), wobei die Klappe (24) mit mindestens einem federnden Dichtring (25, 26) versehen ist, dessen Außendurchmesser (D_{RA}) im entspannten Zustand größer ist als der Innendurchmesser (D₁) der Heißluftöffnung bzw. der Dampfablassöffnung (18).

11. Klappenanordnung nach Anspruch 10, **dadurch gekennzeichnet, dass** die Klappe (24) aus hitzebeständigem Material besteht.

12. Klappenanordnung nach Anspruch 11, **dadurch gekennzeichnet, dass** die Klappe (24) aus Metall oder Kunststoff besteht.

13. Klappenanordnung nach einem der Ansprüche 10 bis 12, **dadurch gekennzeichnet, dass** die Klappe (24) mit zwei beabstandet zueinander angeordneten Dichtringen (25, 26) versehen ist.

14. Klappenanordnung nach einem der Ansprüche 10 bis 13, **dadurch gekennzeichnet, dass** die Klappe (24) eine ballige Außenkontur (28) aufweist.
